# EUROPEAN PATENT SPECIFICATION

(11) **EP 0 843 292 B1**
(45) Date of publication and mention of the grant of the patent: **20.03.2002**
(21) Application number: 97650053.8
(22) Date of filing: 14.11.1997
(51) Int. Cl.: G07F 19/00, G06F 17/60, G07F 7/10, G07G 1/14

(54) **Transaction processing**
Verarbeitung von Transaktionen
Traitement de transactions

(30) Priority: 14.11.1996 IE 960809; 14.11.1996 IE 960807
(43) Date of publication of application: 20.05.1998
(73) Proprietor: FEXCO, Killorglin, County Kerry (IE)
(72) Inventor: Murphy, Frank, County Kerry (IE)
(74) Representative: Schütte, Gearoid

(56) References cited:
- WO-A-91/07725
- GB-A- 2 054 928
- US-A- 5 548 780
- TYGAR J D: "ATOMICITY IN ELECTRONIC COMMERCE" , PROCEEDINGS OF THE 15TH ANNUAL SYMPOSIUM ON PRINCIPLES OF DISTRIBUTED COMPUTING, PHILADELPHIA, MAY 23 - 26, 1996, NR. SYMP. 15, PAGE(S) 8 - 26 , ASSOCIATION FOR COMPUTING MACHINERY XP000681001ISBN: 0-89791-800-2
- PATENT ABSTRACTS OF JAPAN vol. 017, no. 616 (P-1643), 12 November 1993 (1993-11-12) & JP 05 189664 A (FUJITSU LTD), 30 July 1993 (1993-07-30)
- PATENT ABSTRACTS OF JAPAN vol. 017, no. 662 (P-1655), 7 December 1993 (1993-12-07) & JP 05 217074 A (NEC CORP), 27 August 1993 (1993-08-27)

## Description

The invention relates to transaction processing, and more particularly card transaction processing at points-of-sale.

WP-A-91/07725 discloses a transaction processing system comprising a plurality of point-of-sale apparatuses and a central host. Each point-of-sale apparatus comprises a processor, a storage device, a dedicated keyboard with specific point-of-sale function keys, a card reader, a display screen, a receipt printer, and a modem; each point-of- sale apparatus being arranged for capturing data from a card presented for a transaction, determining if it is authorised, and writing transaction data to an host record in the storage device, generating a dataset comprising the host records, writing the dataset to the storage device, automatically transmitting the dataset to the host; and receiving updated data from the host and writing it over existing data on the storage device. The central host comprises means for receiving a host record dataset from each point-of-sale apparatus and automatically transmitting updated data to the apparatus in the same communications session.

GB-A-2054928 also discloses a transaction processing system comprising a plurality of point-of-sale apparatuses and a central host, wherein each point-of-sale apparatus comprises a processor, a storage device, a dedicated keyboard with specific point-of-sale function keys, a card reader, a display screen, a receipt printer, and a modem, each point-of-sale apparatus being arranged for capturing data from a card presented for a transaction, determining if it is authorised, and writing transaction data to an host record in the storage device, and the central host comprises means for receiving a host record dataset from each point-of-sale apparatus.

An object of the invention is to provide more comprehensive card transaction processing at a number of geographically remote locations in a controlled manner. This control is essential for correct and consistent processing at the points-of-sale and communication with external systems to ensure transaction data integrity.

In particular the invention ensures integrity of the transmitted transaction data, permits use of different currencies and ensures that a currency conversion table stored in each point-of-sale apparatus is regularly and easily updated.

According to the invention, there is provided a transaction processing system comprising a plurality of point-of-sale apparatuses and a central host, wherein:-
each point-of-sale apparatus comprises a processor, a storage device, a dedicated keyboard with specific point-of-sale function keys, a card reader, a display screen, a receipt printer, and a modem;
the central host comprises a batch processor connected in a network comprising workstations and a modem pool having a plurality of serial ports, the batch processor being programmed for automatic dialling by the point-of-sale apparatuses ;
each point-of-sale apparatus comprises a stored conversion table and comprises means for:-
   capturing data from a card presented for a transaction, determining if it is authorised, and setting an authorisation flag in the storage device according to the authorisation result;
   receiving an input including a transaction value in a local currency and a desired transaction currency;
   automatically determining an equivalent transaction value in the transaction currency by reference to the conversion table;
   writing transaction data with the transaction value in the transaction currency only to an external record in the storage device;
   appending local currency transaction value data to said transaction data and writing all of said data to a host record in the storage device;
   printing a transaction receipt if the authorisation flag is positive, otherwise aborting the transaction;
   generating a dataset comprising the host records, writing the dataset to the storage device, automatically transmitting the dataset to the host, and setting a host transmission flag according to integrity of the transmission;
   printing the dataset locally if the host transmission flag is positive;
   generating a dataset comprising the external records, writing the dataset to the storage device, and automatically transmitting the dataset to an external data processing system if the host transmission flag is positive; and
   receiving an updated conversion table from the host and writing it over the existing conversion table on the storage device;
the central host comprises means for:-
   receiving a host record dataset from each point-of-sale apparatus;
   automatically validating each apparatus by reference to received identification signals;
   checking integrity of a received host record dataset; and
   automatically transmitting an updated conversion table to the apparatus in the same communications session if the integrity check is positive; and
each point-of-sale apparatus comprises means for setting the transmission flag to indicate integrity of the host record dataset transmission only after receipt of the updated conversion table, whereby the steps of transmitting the dataset, checking integrity at the host, and receiving the updated conversion table are together an atomic operation.

The features of disabling printing of a receipt according to the authorisation flag and disabling external communication according to the transmission flag help to ensure data integrity in a simple manner. By simply appending data to create the host record a fast response time is achieved during a transaction, and again data integrity is ensured. Further the atomic communications session is another simple way of ensuring data and table integrity across all of the point-of-sale apparatuses and the host of the system.

In one embodiment, each point-of-sale apparatus comprises means for automatically performing card authorisation locally if a transaction amount is below a threshold level and on-line in communication with a remote authorisation processor if the transaction amount is above the threshold level, and further comprises means for allowing a user override the automatic choice to force either local or remote authorisation.

Preferably, the modem pool of the host is programmed to communicate with the point-of-sale apparatus using a serial line hunting group.

In another embodiment, the point-of-sale apparatus comprises means for recording host transmission attempts in a log file.

In one embodiment, the processor of each point-of-sale apparatus comprises means for recognising depression of a function key on the keyboard as a remote maintenance instruction and for automatically establishing connection with a remote maintenance system and allowing it direct operation of the apparatus.

The invention will be more clearly understood from the following description of some embodiments thereof, given by way of example only, with reference to the accompanying drawings, in which :-
Fig. 1 is a schematic representation of a transaction processing system of the invention;
Figs. 2(a) and 2(b) are together a flow chart illustrating in overview the manner in which a transaction is executed at a point-of-sale apparatus;
Fig. 3 is a flow chart illustrating uploading operations performed by the apparatus;
Fig. 4 is a flow chart illustrating operations which are carried out in conjunction with the currency conversion table which is stored; and
Fig. 5 is a flow chart illustrating the manner in which local verification data is received.

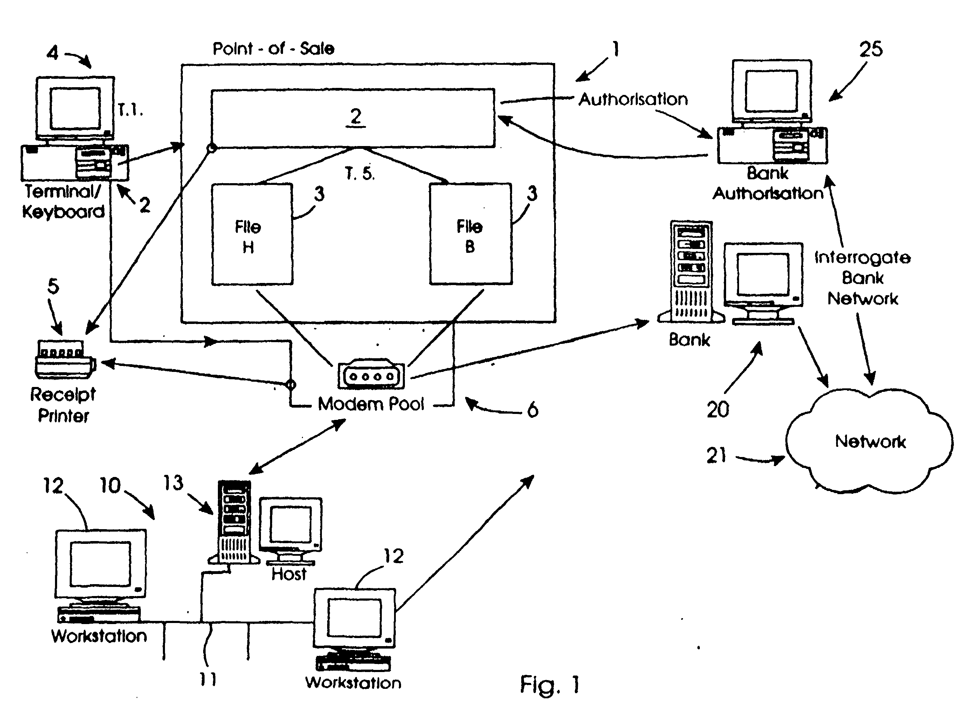

Referring to the drawings, and initially to Fig. 1, there is shown a transaction processing system of the invention. The system comprises a point-of-sale apparatus 1 which is located at a merchant's premises and a remote, off-site host 10. The apparatus 1 may for example, be installed in a car hire company's premises, a retail outlet or any other location where a merchant needs to execute transactions with financial card subscribers. The apparatus 1 comprises a processor 2 and disk drives in which files 3 are stored. The files 3 include a file H which is a processing or host file and a file B which is a bank (financial institution) file. The apparatus 1 also comprises a terminal screen 4, and a keyboard, not shown. The keyboard has a set of specific retailing function keys and does not include general data processing keys. Accordingly, the apparatus 1 is a dedicated point-of-sale machine for simple and fast operation. The card reader is incorporated in the keyboard. The apparatus 1 also comprises a receipt printer 5 and a modem pool 6.

As stated above, the transaction processing system also comprises an off-site host 10 which has a network 11 with workstations 12 and a host processor 13. The off-site host 10 is programmed to communicate with a large number of point-of-sale apparatuses 1 to perform batch processing for them and to provide central control generally. The transaction processing system of the invention comprises a number of point-of-sale apparatuses 1 (only one being shown) and the off-site host 10. The system communicates with a bank transaction processor 20 and a bank authorisation processor 25. The host 10 is configured to ensure effective communication with a large number of point-of-sale apparatuses 10. In particular, the host 10 is a multi-tasking system and includes a multi-serial port device. Modems which support the connection to this device are in turn connected to the modems of the apparatuses 1 via a telephone hunting group. This allows up to eight simultaneous connections to the host.

In brief overview, each point-of-sale apparatus 1 executes a card transaction at a merchant's premises in a transaction currency selected by the customer. The off-site host 10 performs off-line processing and central control operations to assist in this. The bank systems which communicate with the system process the transaction data using only the transaction currency data. Data relating to the local currency of the merchant (if different from the transaction currency) is processed only within the system of the invention, namely the apparatus 1 and the host 10.

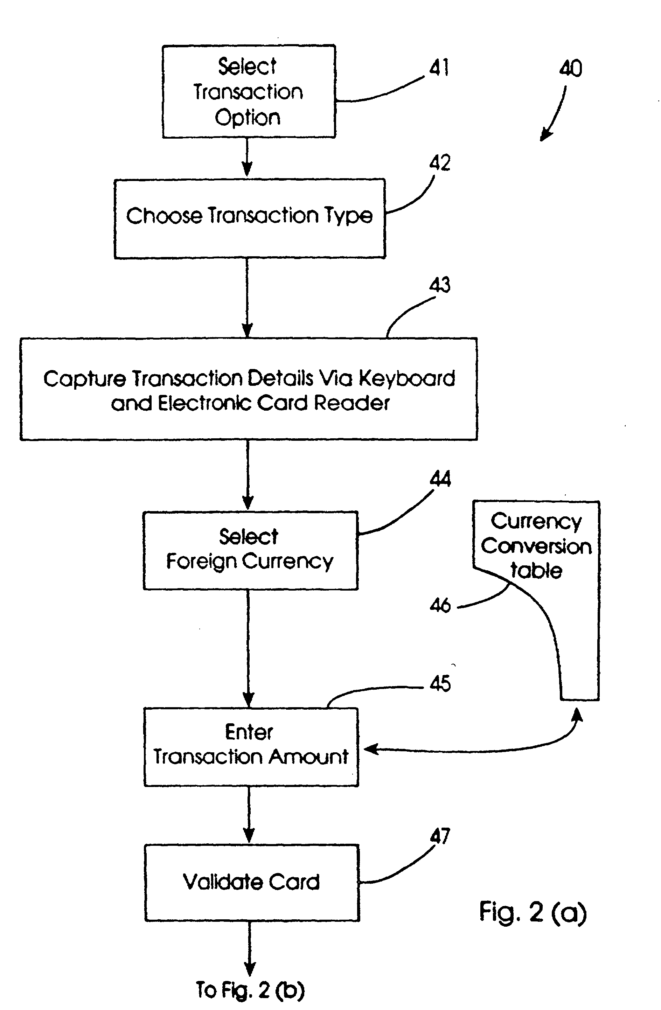

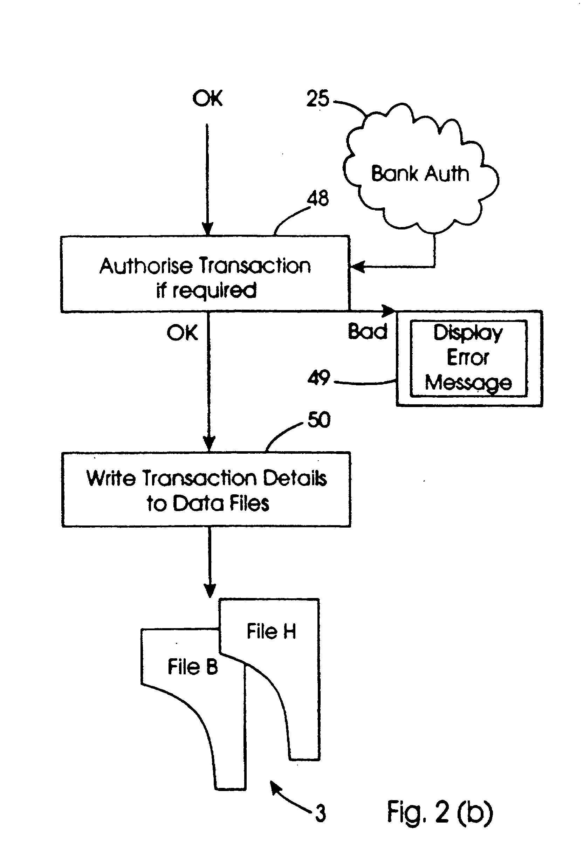

Referring now to Figs. 2(a) and 2(b), a method 40 in which an individual transaction is executed is now described. The merchant operator selects a transaction option in step 41 and in step 42 chooses a card transaction type. These inputs are very easily made because of the small number of keys on the keyboard and the fact that the inputting is totally menu-driven with a simple main menu. This allows for easy merchant operator training and helps to minimise the chances of erroneous inputs. In step 43, transaction data is inputted including the amount in the local currency of the service or product being purchased. The card is automatically read to capture its number. In this embodiment, the reader is a magnetic card reader. In step 44, the merchant operator selects the appropriate currency in which the transaction is to be executed. For example, an American tourist visiting Ireland may purchase a car hire service quoted in Irish Pounds. The merchant operator may then select USS as being the transaction currency to be used for execution of the transaction. The transaction amount is inputted in step 45 in the local currency and the processor 2 then looks up the currency conversion table 46 to convert to the transaction currency. The manner in which the conversion table 46 is received is described below. The processor ensures that only the current table is accessed by automatically overwriting a previous table immediately when a new table is received.

In step 47, the processor 2 processes the card data which has been captured by the card reader. The card reader is an integral part of the keyboard and this provides for compactness at the merchant's premises. This validation operation involves ensuring that the card number is valid and the card has not expired. In more detail, the card reader reads all relevant data from track 2 of the magnetised part of the card. Subsequently the processor carries out validation checks on the card number and expiry date. If either validation check fails, the transaction is aborted.

In step 48, the processor 2 authorises the transaction. Authorisation may be either local by reference to a stored "hot card" list, or on-line in communication with the bank authorisation processor 25. The processor 2 automatically performs on-line authorisation if the transaction amount exceeds a pre-set threshold level. However, the merchant operator has the option of over-riding the automatic mechanism and forcing either local or on-line authorisation, depending on the particular circumstances. For example, if it is not possible to establish a communications session with the bank authorisation processor 25, then there may be forced local authorisation. Alternatively, if the merchant operator is suspicious for any particular reason, he/she may cause forced on-line authorisation to take place. If authorisation is negative, an error message is displayed as indicated by the step 49 and the transaction is aborted.

The processor 2 ensures that the authorisation procedure is not circumvented by preventing printing of a receipt if authorisation has not taken place. This is achieved by setting an authorisation flag to a positive value if authorisation is positive. The flag remains at a default negative value if authorisation does not take place or it is negative.

If authorisation is positive, the processor in step 50 writes the transaction data to files in the apparatus 1. To do this, it generates a data record which includes transaction data, excluding data expressed in the local currency. This data record is written as an external record to the file B. After doing this, the processor 2 appends data relating to the local currency to create a host record and this is written to the file H. This is a fast and effective mechanism which prevents delays in apparatus response time.

In addition, the processor 2 directs printing of a customer receipt only if the authorisation flag is positive. An important aspect of the customer receipt is that the amount of the transaction is expressed in the (usually foreign) transaction currency so that the customer can see exactly how much is being paid in the currency he or she is familiar with. All of the above operations have been performed locally at the merchant's premises using the point-of-sale apparatus 1.

During a transaction period records are appended in real time to the files H and B and at the end of the period such as the end of the day, various uploads and downloads take place in conjunction with both the off-site host 10 and the bank transaction processor 20. The processor 2 communicates the host records and external records retrieved from their respective files in communication datasets.

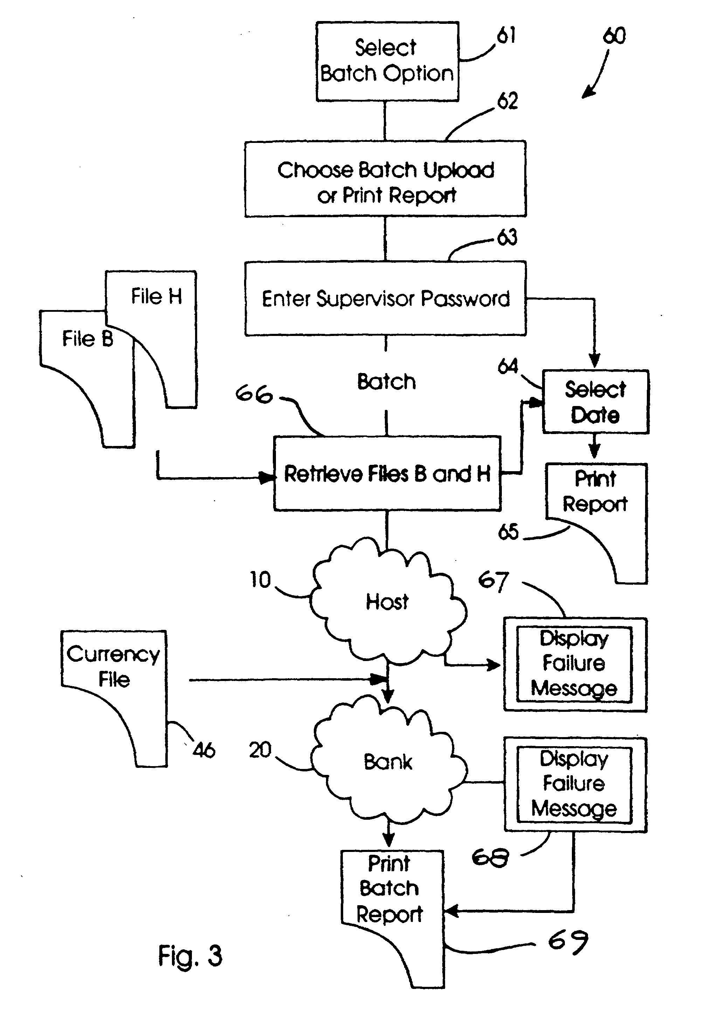

As indicated by the method 60 in Fig. 3, the merchant operator may select a batch operation in step 61 and in step 62 may choose to perform a batch upload or print a report. Further steps require input of a supervisor password in step 63. Where a report is required, the date is retrieved in step 64 from a real-time clock and the report is printed in step 65. However, the report instruction is disabled according to a transmission flag until an upload to the off-site host 10 has taken place for the particular transaction period. To process the data for the report and ensure there is no data corruption, the processor 2 backs up the report data onto the fixed disk. The number of backup files is parameter-driven.

In step 66, the processor 2 retrieves the files B and H, generates the host and external datasets, and establishes a communication session with the host 10. It then transmits the host dataset directly to the host 10 without performing any further processing operations on this data. If there are any communication problems, a display failure message is displayed in step 67 and the transmission is re-tried. The processor 2 will not proceed to upload the external dataset to the bank transaction processor 20 until after a successful upload to the host 10 has taken place (transmission flag positive). This is because the off-site host 10 is part of the same transaction processing system as the apparatus 1 and it is essential that the system be updated internally before there is communication with an external system such as the bank transaction processor 20.

An important aspect of the upload to the host 10 is that the host 10 automatically validates the merchant address and automatically chooses a relevant currency table which applies to that merchant when the communications session is established. Thus, immediately after valid upload of the host dataset to the host 10, the host 10 automatically downloads the current currency conversion table. In this way, the apparatus 1 always stores a current currency conversion table and this data does not become out-of-date. The current currency conversion table is written over the previous table. If any of the batch communications - data upload, merchant validation at the host, table download, table over-writing - fails, the entire communication fails and must be repeated. The transmission flag remains negative until this, atomic, operation is successful.

Once upload of the host dataset has been performed successfully, the apparatus 1 may print a summary report using this data as indicated by the steps 64 and 65. The processor 2 then attempts upload of the external dataset to the bank transaction processor 20. Again, the data transfer is the direct contents of the external records, without additional processing being performed. Three attempts are made to successfully upload the external dataset and if all three are unsuccessful in the next transaction period the processor 2 simply appends records to the file B. Each unsuccessful attempt is indicated in a failure message in step 68. Every transmission attempt either to the off-site host 10 or to the bank transaction processor 20 is recorded in a separately stored log file.

Subsequent to upload of the datasets, the apparatus 1 and the host 10 independently perform validation operations to generate various reports. These are subsequently cross-referenced to check accuracy.

Another important aspect of the invention is the fact that personnel at the off-site host 10 may perform remote maintenance operations on each apparatus 1 by establishing on-line contact and activating a remote execution program. In more detail, two keys on a host workstation are used to initiate remote maintenance, one key for each of two types of maintenance. Depression of one of these keys causes the processor 2 to establish communication with the remote maintenance processor on the host network, which, in turn takes over control of the apparatus 1 for fault diagnosis and debugging.

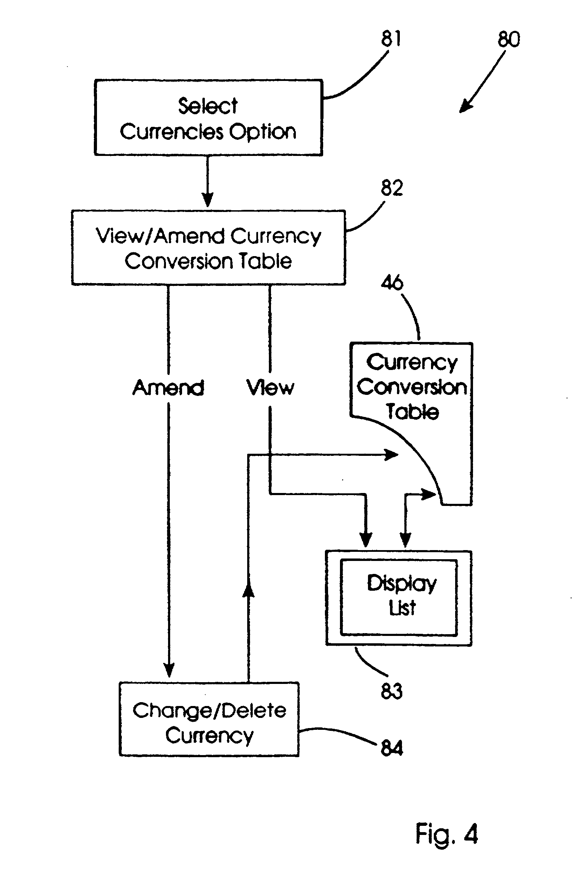

Referring now to Fig. 4, a method 80 is illustrated in which in step 81 the merchant operator may select a "currencies" option which allows choice in step 82 of viewing or amending a currency conversion table 46. In step 84, the processor 2 may amend the table provided a supervisor password had previously been inputted. In step 83, it may simply direct displaying of the table. This is useful as it provides a simple output for reference by customers and the merchant operators.

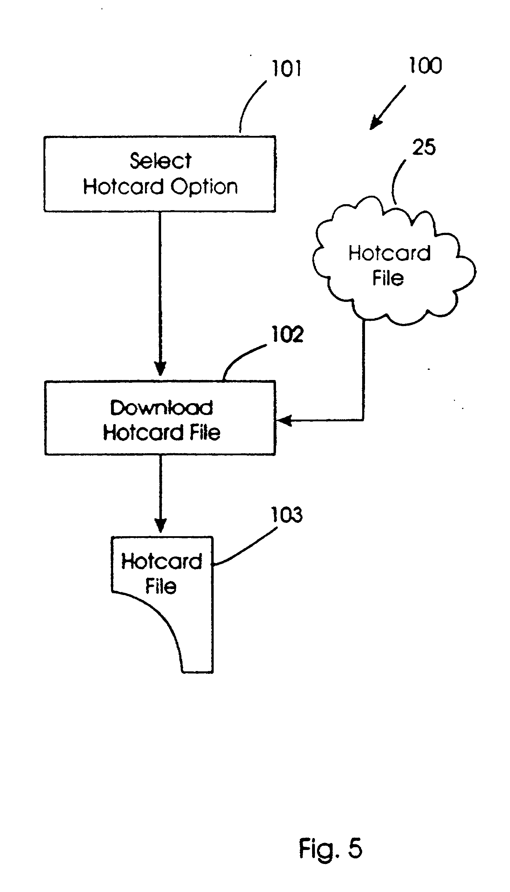

Referring now to Fig. 5, a method 100 is illustrated in which in step 101 the merchant operator may select a "hot card" option which causes the processor 2 to in step 102 contact the bank authorisation processor 25 to request download of a hot card file 103. This is subsequently used for local card authorisation.

It will be appreciated that the invention provides for execution of transactions in a customer's desired currency so that he/she can immediately see how much money is being spent. This "user-friendliness" is achieved in a simple manner by communication with the off-site host 10 which acts in conjunction with a number of apparatuses 1.

The invention is not limited to the embodiments described, but may be varied within the scope of the claims in construction and detail.

## Claims

1. A transaction processing system comprising a plurality of point-of-sale apparatuses (1) and a central host (10), wherein:-
each point-of-sale apparatus (1) comprises a processor (2), a storage device (3), a dedicated keyboard with specific point-of-sale function keys, a card reader, a display screen (4), a receipt printer (5), and a modem (6);
the central host (10) comprises a batch processor connected in a network comprising work stations (12) and a modem pool having a plurality of serial ports, the batch processor being programmed for automatic dialling by the point-of-sale apparatuses (1);
each point-of-sale apparatus (1) comprise a stored conversion table (46) and comprises means for:-
capturing data from a card presented for a transaction, determining if it is authorised, and setting an authorisation flag in the storage device according to the authorisation result;
receiving an input including a transaction value in a local currency, and an indication of a desired transaction currency;
automatically determining an equivalent transaction value in the transaction currency by reference to the conversion table (46);
writing transaction data with the transaction value in the transaction currency only to an external record (B) in the storage device (3);
appending local currency transaction value data to said transaction data and writing all of said data to a host record (H) in the storage device (3);
printing a transaction receipt if the authorisation flag is positive, otherwise aborting the transaction;
generating a dataset comprising the host records, writing the dataset to the storage device, automatically transmitting the dataset to the host (10), and setting a host transmission flag according to integrity of the transmission;
printing the dataset locally if the host transmission flag is positive;
generating a dataset comprising the external records, writing the dataset to the storage device, and automatically transmitting the dataset to an external data processing system (20) if the host transmission flag is positive; and
receiving an updated conversion table from the host (10) and writing it over the existing conversion table (46) on the storage device (3);
the central host (10) comprises means for:-
receiving a host record dataset from each point-of-sale apparatus (1);
automatically validating each apparatus (1) by reference to received identification signals;
checking integrity of a received host record dataset; and
automatically transmitting an updated conversion table (46) to the apparatus (1) in the same communications session if the integrity check is positive; and
each point-of-sale apparatus (1) comprises means for setting the transmission flag to indicate integrity of the host record dataset transmission only after receipt of the updated conversion table (46), whereby the steps of transmitting the dataset, checking integrity at the host, and receiving the updated conversion table are together an atomic operation.

2. A system as claimed in claim 1, wherein each point-of-sale apparatus (1) comprises means for automatically performing card authorisation locally if a transaction amount is below a threshold level and on-line in communication with a remote authorisation processor (25) if the transaction amount is above the threshold level, and further comprises means for allowing a user override the automatic choice to force either local or remote authorisation.

3. A system as claimed in claims 1 or 2, wherein the modem pool of the host (10) is programmed to communicate with the point-of-sale apparatus (1) using a serial line hunting group.

4. A system as claimed in any preceding claim, wherein the point-of-sale apparatus (1) comprises means for recording host transmission attempts in a log file.

5. A system as claimed in any preceding claim, wherein the processor (2) of each point-of-sale apparatus (1) comprises means for recognising depression of a function key on the keyboard as a remote maintenance instruction and for automatically establishing connection with a remote maintenance system and allowing it direct operation of the apparatus.

## Patentansprüche

1. Teilhaberbetriebssystem mit einer Anzahl von Verkaufsstellengeräten (1) und einem zentralen Hauptrechner (10), bei dem:
jedes Verkaufsstellengerät (1) einen Prozessor (2), eine Speichereinrichtung (3), eine zweckgebundene Tastatur mit speziellen Verkaufsstellen-Funktionstasten, einen Kartenleser, einen Anzeigebildschirm (4), einen Quittungsdrucker (5) und ein Modem (6) umfasst;
der zentrale Hauptrechner (10) einen Stapelprozessor angeschlossen in einem Arbeitsplätze (12) aufweisenden Netz und ein Modem-Pool mit einer Anzahl serieller Anschlüsse umfasst, wobei der Stapelprozessor für automatisches Wählen durch die Verkaufsstellengeräte (1) programmiert wird;
jedes Verkaufsstellengerät (1) eine gespeicherte Umrechnungstabelle (46) aufweist und Mittel umfasst zum:
Festhalten von Daten von einer für eine Transaktion vorgelegten Karte, Bestimmen, ob sie berechtigt ist, und Setzen eines Berechtigungsmerkers in der Speichereinrichtung in Übereinstimmung mit dem Berechtigungsergebnis;
Erhalten einer Eingabe, die einen Transaktionswert in einer lokalen Währung und eine Angabe einer gewünschten Transaktionswährung umfasst;
automatischen Bestimmen eines äquivalenten Transaktionswerts in der Transaktionswährung durch Bezugnahme auf die Umrechnungstabelle (46);
Schreiben von Transaktionsdaten mit dem Transaktionswert in der Transaktionswährung nur in einer externen Aufzeichnung (B) in der Speichereinrichtung (3);
Anhängen der Transaktionswertdaten der lokalen Währung an die genannten Transaktionsdaten und Schreiben aller der genannten Daten in einen Hauptrechnerdatensatz (H) in der Speichereinrichtung (3);
Drucken einer Transaktionsquittung, wenn der Berechtigungsmerker positiv ist, ansonsten Abbrechen der Transaktion;
Erzeugen eines die Hauptrechneraufzeichnungen aufweisenden Datensatzes, Schreiben des Datensatzes in die Speichereinrichtung, automatisches Übertragen des Datensatzes an den Hauptrechner (10) und Setzen eines Hauptrechnerübertragungsmerkers in Übereinstimmung mit der Integrität der Übertragung;
lokalen Drucken des Datensatzes, wenn der Hauptrechnerübertragungsmerker positiv ist;
Erzeugen eines die externen Aufzeichnungen aufweisenden Datensatzes, Schreiben des Datensatzes in die Speichereinrichtung, und automatischen Übertragen des Datensatzes an ein externes Datenverarbeitungssystem (20), wenn der Hauptrechnerübertragungsmerker positiv ist; und
Erhalten einer aktualisierten Umrechnungstabelle von dem Hauptrechner (10) und Schreiben derselben über die existierende Umrechnungstabelle (46) auf der Speichereinrichtung (3);
der zentrale Hauptrechner (10) Mittel umfasst zum:
Erhalten eines Hauptrechneraufzeichnungsdatensatzes von jedem Verkaufsstellengerät (1);
automatischen Gültigsetzen jedes Geräts (1) durch Bezugnahme auf erhaltene Identifikationssignale;
Prüfen der Integrität eines erhaltenen Hauptrechneraufzeichnungsdatensatzes; und
Automatischen Übertragen einer aktualisierten Umrechnungstabelle (46) an das Gerät (1) in der selben Session, wenn die Integritätsprüfung positiv ist; und
jedes Verkaufsstellengerät (11) Mittel zum Setzen des Übertragungsmerkers aufweist, um Integrität der Hauptrechneraufzeichnungsdatensatzübertragung nur nach Empfang der aktualisierten Umrechnungstabelle (46) anzuzeigen, wodurch die Schritte zum Übertragen des Datensatzes, Prüfen der Integrität beim Hauptrechner und Empfangen der aktualisierten Umrechnungstabelle zusammen einen unterbrechungsfreien Betrieb darstellen.

2. System nach Anspruch 1, bei dem jedes Verkaufsstellengerät (1) Mittel zum automatischen Durchführen von Kartenberechtigung vor Ort, wenn ein Transaktionsbetrag unter einem Grenzwert liegt, und Online in Kommunikation mit einem Fernberechtigungsprozessor (25) aufweist, wenn der Transaktionsbetrag über dem Grenzwert liegt, und weiter Mittel aufweist, um einem Benutzer zu ermöglichen, die automatische Auswahl außer kraft zu setzen, um entweder Berechtigung vor Ort oder Fernberechtigung zu erzwingen.

3. System nach Anspruch 1 oder 2, bei dem das Modempool des Hauptrechners (10) programmiert ist, um mit dem Verkaufsstellengerät (1) unter Verwendung eines seriellen Sammelanschlusses zu kommunizieren.

4. System nach einem vorhergehenden Anspruch, bei dem das Verkaufsstellengerät (1) Mittel zum Aufzeichnen von Hauptrechnerübertragungsversuchen in einer Log-Datei aufweist.

5. System nach einem vorhergehenden Anspruch, bei dem der Prozessor (2) jedes Verkaufsstellengeräts (1) Mittel zum Erkennen des Niederdrückens einer Funktionstaste auf der Tastatur als eine Fernwartungsanweisung und zum automatischen Herstellen einer Verbindung mit einem Fernwartungssystem aufweist, und um diesem direkte Bedienung des Geräts zu ermöglichen.

## Revendications

1. Système de traitement de transactions comprenant une pluralité d'appareils de point de vente (1) et un hôte central (10), dans lequel :
chaque appareil de point de vente (1) comprend un processeur (2), un dispositif de stockage (3), un clavier spécialisé avec des touches de fonction spécifiques de point de vente, un lecteur de cartes, un écran d'affichage (4), une imprimante de reçus (5), et un modem (6);
l'hôte central (10), comprend un processeur par lots connecté dans un réseau comprenant des stations de travail (12) et un groupe de modems ayant une pluralité de portes série, le processeur par lots étant programmé pour l'appel automatique par les appareils de point de vente (1);
chaque appareil de point de vente (1) comprend une table de conversion stockée (46) et comprend des moyens pour :
saisir des données d'une carte présentée pour une transaction, déterminer si elle est autorisée, et mettre un indicateur d'autorisation dans le dispositif de stockage en fonction du résultat d'autorisation;
recevoir une entrée incluant une valeur de transaction dans une devise locale, et une indication d'une devise de transaction désirée;
déterminer automatiquement une valeur de transaction équivalente dans la devise de transaction par référence à la table de conversion (46);
écrire les données de transaction avec la valeur de la transaction dans la devise de transaction seulement à un enregistrement externe (B) dans le dispositif de stockage (3);
ajouter les données de valeur de transaction en devise locale auxdites données de transaction et écrire toutes lesdites données à un enregistrement hôte (H) dans le dispositif de stockage (3);
imprimer un reçu de transaction si l'indicateur d'autorisation est positif, autrement abandonner la transaction;
générer un ensemble de données comprenant les enregistrements hôtes, écrire l'ensemble de données au dispositif de stockage, transmettre automatiquement l'ensemble de données à l'hôte (10), et mettre un indicateur de transmission à l'hôte en fonction de l'intégrité de la transmission;
imprimer localement l'ensemble de données si l'indicateur de transmission à l'hôte est positif;
générer un ensemble de données comprenant les enregistrements externes, écrire l'ensemble de données au dispositif de stockage, et transmettre automatiquement l'ensemble de données à un système externe de traitement de données (20) si l'indicateur de transmission à l'hôte est positif; et
recevoir une table de conversion actualisée de l'hôte (10) et l'écrire au-dessus de la table de conversion existante (46) sur le dispositif de stockage (3);
l'hôte central (10) comprend des moyens pour :
recevoir un ensemble de données d'enregistrement hôte de chaque appareil de point de vente (1);
valider automatiquement chaque appareil (1) par référence aux signaux d'identification reçus;
vérifier l'intégrité d'un ensemble de données d'enregistrement hôte reçu; et
transmettre automatiquement une table de conversion actualisée (46) à l'appareil (1) au cours de la même session de communication si la vérification d'intégrité est positive; et
chaque appareil de point de vente (1) comprend un moyen pour mettre l'indicateur de transmission afin d'indiquer l'intégrité de la transmission de l'ensemble de données d'enregistrement hôte seulement après la réception de la table de conversion actualisée (46), en vertu de quoi les étapes consistant à transmettre l'ensemble de données, vérifier l'intégrité au niveau de l'hôte, et recevoir la table de conversion actualisée sont ensemble une opération atomique.

2. Système tel que revendiqué dans la revendication 1, dans lequel chaque appareil de point de vente (1) comprend un moyen pour exécuter automatiquement une autorisation de carte localement si un montant de transaction est inférieur à un niveau seuil et en communication en ligne avec un processeur d'autorisation à distance (25), si le montant de transaction est supérieur au niveau seuil, et comprend en outre un moyen pour autoriser un utilisateur à annuler le choix automatique afin de forcer une autorisation locale ou à distance.

3. Système tel que revendiqué dans les revendications 1 ou 2, dans lequel le groupe de modems de l'hôte (10) est programmé pour communiquer avec l'appareil de point de vente (1) en utilisant un groupe de recherche de ligne en série.

4. Système tel que revendiqué dans l'une quelconque des revendications précédentes, dans lequel l'appareil de point de vente (1) comprend un moyen pour enregistrer les tentatives de transmission à l'hôte dans un fichier-journal.

5. Système tel que revendiqué dans l'une quelconque des revendications précédentes, dans lequel le processeur (2) de chaque appareil de point de vente (1) comprend un moyen pour reconnaître l'enfoncement d'une touche de fonction sur le clavier comme une instruction de maintenance à distance et pour établir automatiquement la connexion avec un système de maintenance à distance et l'autoriser à faire fonctionner directement l'appareil.
